(19) Europäisches Patentamt
European Patent Office
Office européen des brevets

(11) **EP 3 176 084 B1**

(12) **EUROPÄISCHE PATENTSCHRIFT**

(45) Veröffentlichungstag und Bekanntmachung des Hinweises auf die Patenterteilung:
30.10.2019 Patentblatt 2019/44

(51) Int Cl.:
*B64C 27/08* *(2006.01)*      *B64C 39/02* *(2006.01)*
*G05D 1/08* *(2006.01)*

(21) Anmeldenummer: 16197760.8

(22) Anmeldetag: 13.09.2011

(54) **VERFAHREN ZUR VERBESSERUNG DER FLUGEIGENSCHAFTEN EINES MULTIKOPTERS IN AUSFALLSITUATIONEN UND MULTIKOPTER MIT VERBESSERTEN FLUGEIGENSCHAFTEN IN AUSFALLSITUATIONEN**

METHOD FOR IMPROVING THE FLYING CHARACTERISTICS OF A MULTICOPTER IN FAILURE SITUATIONS AND MULTICOPTER WITH IMPROVED FLYING CHARACTERISTICS IN FAILURE SITUATIONS

PROCÉDÉ D'AMÉLIORATION DES QUALITÉS DE VOL D'UN MUTICOPTÈRE DANS DES SITUATIONS DE PANNE ET MULTICOPTÈRE PRÉSENTANT DES QUALITÉS DE VOL AMÉLIORÉES DANS DES SITUATIONS DE PANNE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.09.2010 DE 102010040770**

(43) Veröffentlichungstag der Anmeldung:
**07.06.2017 Patentblatt 2017/23**

(62) Dokumentnummer(n) der früheren Anmeldung(en) nach Art. 76 EPÜ:
**11758184.3 / 2 616 333**

(73) Patentinhaber: **Ascending Technologies GmbH 82152 Krailling (DE)**

(72) Erfinder:
• **ACHTELIK, Michael**
**82131 Stockdorf (DE)**
• **DOTH, Klaus-Michael**
**82152 Krailling (DE)**
• **GURDAN, Daniel**
**82110 Gräfelfing (DE)**
• **STUMPF, Jan**
**82152 Planegg (DE)**

(74) Vertreter: **Viering, Jentschura & Partner mbB Patent- und Rechtsanwälte Am Brauhaus 8 01099 Dresden (DE)**

(56) Entgegenhaltungen:
DE-A1-102008 014 853      US-A1- 2010 108 801

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft im Allgemeinen Multikoptersysteme und deren Flugeigenschaften in Ausfallsituationen. Spezieller betrifft die Erfindung ein Verfahren zur Verbesserung der Flugeigenschaften eines Multikopters in Ausfallsituationen sowie Multikopter mit verbesserten Flugeigenschaften in Ausfallsituationen.

Drehflügelfluggeräte mit einer Mehrzahl von Rotoren sind im Stand der Technik gut bekannt. Derzeit am weitesten verbreitet sind Quadrokopter, die durch vier in einer Ebene angeordnete, im Wesentlichen senkrecht nach unten wirkende Rotoren definiert sind. Ebenfalls weit verbreitet sind Multikopter mit mehr als vier Rotoren, wie beispielsweise Hexakopter mit sechs Rotoren oder Oktokopter mit acht Rotoren.

Multikoptersysteme mit mehr als vier Rotoren haben theoretisch die Möglichkeit, bei Ausfall einzelner Rotoren noch sicher zu fliegen. Derartige redundante Multikopter beschreibt beispielsweise die US2006/0266881 A1. Fig. 1 zeigt einen Multikopter mit einer redundanten Mehrzahl von insgesamt 36 Rotoren, bei dem der Ausfall eines Rotors offensichtlich durch die verbleibenden Rotoren kompensiert werden kann.

Redundante Multikoptersysteme mit acht Rotoren sind beispielsweise in der DE 10 2008 014 853 offenbart. Fig 1 zeigt einen Oktokopter mit V-förmiger Rotoranordnung, der den Ausfall eines Rotors tolerieren kann, indem die dem ausgefallenen Rotor benachbarten Rotoren zusätzlichen Schub liefern bzw. die gegenüberliegenden Rotoren in ihrer Leistung gedrosselt werden. Nach dem gleichen Prinzip funktioniert auch der in "Technology Review" 12.2009 (deutsche Ausgabe) auf S. 33 beschriebene Oktokopter mit kreisförmiger Rotoranordnung.

Auch Hexakopter mit redundanten Flugeigenschaften sind im Stand der Technik beschrieben. Die WO 2008/000203 A1 offenbart ein Fluggerät mit drei Antriebseinheiten in Y-Anordnung, wobei jede Antriebseinheit jeweils einen ersten und einen zweiten Rotor aufweist. Wenn ein Rotor einer Antriebseinheit während des Flugs ausfällt, kann der verbleibende zweite Rotor derselben Antriebseinheit ausreichend Schub zur Verfügung stellen, um das Fluggerät in der Luft zu halten. Die Rotoren der anderen Antriebseinheiten werden entsprechend in ihrer Leistung gedrosselt.

Eine ähnliche Konfiguration ist aus der US 2010/0108801 A1 bekannt, die ebenfalls ein Drehflügelfluggerät mit mehreren Antriebseinheiten beschreibt, wobei jede Antriebseinheit jeweils einen ersten und einen zweiten Rotor aufweist.

Grundsätzlich müssen bei Ausfall eines Rotors sowohl dessen fehlende Auftriebsleistung als auch dessen fehlendes Drehmoment durch entsprechende Ansteuerung der verbleibenden Rotoren kompensiert werden. Dies erfolgt nach dem Stand der Technik dadurch, dass die Leistung eines oder mehrerer der verbleibenden Rotoren gedrosselt wird. Je nach Anzahl und Anordnung der Rotoren kann dies zu dramatischen Einbußen im resultierenden Auftrieb und/oder der resultierenden Manövrierfähigkeit führen. Besonders deutlich wird dies im Falle von Hexakoptern. So reduziert sich der möglich Maximalschub des Hexakopters der WO 2008/000203 A1 bei Ausfall eines Rotors bereits theoretisch auf 50 %. Zieht man in der Praxis weitere 10 % Regelungsreserve ab, stehen im Redundanzfall bestenfalls 45 % des ursprünglich installierten Rotorschubes zur Verfügung. Dementsprechend ist auch das maximale Abfluggewicht auf 45 % des theoretisch installierten Gesamtschubes begrenzt, was die Einsatzmöglichkeiten eines solchen Systems beispielsweise für die Luftfotografie beträchtlich einschränkt. Noch nicht berücksichtigt ist dabei der Effizienzverlust durch die koaxiale Propelleranordnung.

Sind die Rotoren eines Hexakopters hingegen kreisförmig um den Schwerpunkt des Fluggeräts angeordnet, führt der Ausfall eines Rotors dazu, dass der Hexakopter nicht mehr voll manövrierfähig ist. Ein Roll- oder Pitch-Kommando erzeugt in diesem Fall jeweils ein starkes Yaw-Moment, da sich nach Ausfall eines Rotors zwei Rotoren mit gleicher Solldrehrichtung nebeneinander befinden. Die Steuerung einer Nick- oder Rollbewegung des Hexakopters führt also gleichzeitig zu einer unkontrollierten Drehung um die Hochachse. Ein Fluggerät mit unkontrolliertem Steuerverhalten um die Hochachse kann keinesfalls als redundant bezeichnet werden und ist in dieser Art auch nicht praxistauglich, Somit liegt nach dem Stand der Technik keine Möglichkeit vor, einen Hexakopter in dieser Rotoranordnung redundant auszulegen.

Auch bei einem Oktokopter gemäß der DE 10 2008 014 853 führt der Ausfall eines Rotors zu großen Einbußen in der Auftriebsleistung. Wie unten näher erläutert, reduziert die Kompensation eines ausgefallenen Rotors mittels Drosselung der jeweiligen Leistung der übrigen Rotoren das mögliche Abfluggewicht beträchtlich. Ähnliche Überlegungen treffen auf vielzählige andere Multikopter zu, jeweils in Abhängigkeit von der Anzahl und Anordnung der Rotoren.

Es besteht daher der Bedarf an einem Verfahren, das den resultierenden Auftrieb und/oder die resultierende Manövrierfähigkeit eines Multikopters in Ausfallsituationen bei einer gegebenen Rotoranordnung erhöht. Es besteht ferner ein Bedarf an einem Multikopter mit verbesserten Flugeigenschaften in Ausfallsituationen. Demgemäß ist es Aufgabe der Erfindung, ein Verfahren und einen Multikopter bereitzustellen, wobei die Flugeigenschaften des Multikopters in Ausfallsituationen verbessert werden bzw. sind.

Diese Aufgabe wird durch die Merkmale der unabhängigen Ansprüche 1 und 9 gelöst, während vorteilhafte Ausführungsformen in den abhängigen Ansprüchen definiert sind. Es wird ein Verfahren zur Verbesserung der Flugeigenschaften eines Multikopters in einer Ausfallsituation bereitgestellt, wobei der Multikopter zumindest sechs Rotoren mit jeweils definierter Solldrehrichtung umfasst und eine Steuerungselektronik mit hinterlegtem Steuerprogramm, das Verfahren aufweisend:

- Ansteuern der Rotoren mit der Steuerungselektronik derart, dass sie gemäß ihrer jeweiligen Solldrehrichtung drehen,
- in der Ausfallsituation Ansteuern zumindest eines der verbleibenden Rotoren mit der Steuerungselektronik derart, dass er zumindest zeitweise entgegen seiner Solldrehrichtung dreht.

Dadurch wird es zum einen ermöglicht, dass Multikopter mit sechs Rotoren, die nicht wie in der WO 2008/000203 A1 angeordnet sind, redundante Flugeigenschaften aufweisen. Zum anderen kann durch dieses Verfahren die Auftriebsleistung von Multikoptern, insbesondere mit acht oder mehr Rotoren, gesteigert werden.

Multikopter bedeutet in diesem Zusammenhang ein Drehflügelfluggerät mit einer Mehrzahl von Rotoren. Diese Rotoren sind üblicherweise auf Trägerelementen angeordnet, die wiederum über Verstrebungselemente verbunden sein können. An den Träger- oder Verstrebungselementen kann in der Nähe des Schwerpunkts des Fluggeräts ein Rumpfelement angebracht sein, das zum Tragen einer Steuerungselektronik und einer Energieversorgung dienen kann. Die Rotoren werden über Antriebseinheiten angetrieben, üblicherweise Elektromotoren, die von der Steuerungselektronik angesteuert und von der Energieversorgung gespeist werden.

Die Rotoren des Multikopters können identische Durchmesser aufweisen. Sie können, wenn sie in Solldrehrichtung drehen, im Wesentlichen senkrecht nach unten wirken. Die Solldrehrichtung ergibt sich bei den Rotoren aus der Formgebung ihrer Rotorblätter, insbesondere bei Rotoren mit festem Anstellwinkel, und entspricht der Drehrichtung, in der der Rotor bauartbedingt den meisten Schub erzeugt. Üblicherweise kommen in einem Multikopter Rotoren mit entgegengesetzter Solldrehrichtung jeweils in gleicher Anzahl zum Einsatz, also beispielsweise drei rechtsdrehende und drei linksdrehende Rotoren in einem Hexakopter, vier rechtsdrehende und vier linksdrehende Rotoren in einem Oktokopter, usw.

Von einer Ausfallsituation wird im Folgenden gesprochen, wenn die Leistung eines oder mehrerer Rotoren stark herabgesetzt ist oder gänzlich wegfällt, beispielsweise aufgrund eines Bruchs eines Rotorblatts oder eines Ausfalls der Antriebseinheit, Diejenigen Rotoren, die in einer solchen Situation erfindungsgemäß derart angesteuert werden, dass sie zumindest zeitweise entgegen ihrer Solldrehrichtung drehen, werden im Folgenden als Ausgleichsrotoren bezeichnet. Der Schub, den ein Rotor erzeugt, der entgegen seiner Solldrehrichtung dreht, wird im Folgenden negativer Schub genannt.

Ferner werden im Folgenden die Steuerung um die Längsachse (X-Achse) als "Roll" bezeichnet; die Steuerung um die Querachse (Y-Achse) als "Nick" bzw. "pitch"; die Steuerung um die Hochachse (Z-Achse) als "Gier" bzw. "yaw"; und das Steigen bzw. Sinken als "(Gesamt-)Schub" bzw. "thrust". Die Längsachse (X-Achse) entspricht dabei der Achse durch den Schwerpunkt des Fluggeräts, die sich in der üblichen, bevorzugten oder bauartbedingten Richtung der Vorwärtsbewegung des Fluggeräts erstreckt. Sie entspricht üblicherweise, jedoch nicht zwingend, einer längsten Symmetrieachse des Fluggeräts.

## Multikopter mit zumindest acht Rotoren (z. B. Oktokopter):

In einer speziellen Ausführungsform umfasst das Verfahren das Bereitstellen von zumindest acht Rotoren, wobei bei Ausfall eines Rotors zumindest einer der verbleibenden Rotoren derart angesteuert wird, dass er dauerhaft entgegen seiner Solldrehrichtung dreht bzw. negativen Schub erzeugt.

Allgemein gesprochen kann dadurch ein Moment erzeugt werden, das es gestatten kann, dass die übrigen Rotoren mit größerer Leistung betrieben werden können im Vergleich zu einer Kompensation allein durch Drosselung der Leistung der einzelnen Rotoren. Dadurch kann letztlich der Gesamtschub des Multikopters in Ausfallsituationen erhöht werden, was dazu führt, dass dieser ein höheres Abfluggewicht gegenüber einem Multikopter des Standes der Technik aufweisen kann. Dieses Ergebnis ist für den Fachmann überraschend, da das Drehen eines Rotors entgegen seiner Solldrehrichtung bzw. ein negativer Schub als solches die Auftriebsleistung des Multikopters zunächst verringert. Dementsprechend wurde das Drehen eines Rotors entgegen seiner Solldrehrichtung zur Verbesserung der Flugeigenschaften bzw.

Traglast eines Multikopters in Ausfallsituationen von der Fachwelt bisher nicht in Erwägung gezogen. Auch gilt ein "falsch herum" laufender Propeller als ineffizient, da er nicht für diese Drehrichtung optimiert ist, so dass auch aus diesem Grund eine Drehrichtungsumkehr nicht nahegelegen hat. Ferner muss ein Ausgleichsrotor in der Ausfallsituation sehr schnell abgebremst, umgepolt und neu beschleunigt werden. Insbesondere in Bezug auf Multikopter, bei denen vorwiegend bürstenlose Motoren mit aufwändiger Steuerungselektronik verwendet werden, war dem Fachmann keinesfalls klar, dass dies effizient und hinreichend schnell funktionieren kann. Insgesamt bewirkt also das hierin vorgestellte Verfahren einen vorteilhaften Effekt, der aus Sicht des Fachmanns überraschend ist.

Die Ermittlung des Rotors bzw. der Rotoren, die derart angesteuert werden, dass sie dauerhaft entgegen ihrer Solldrehrichtung drehen, d. h. der Ausgleichsrotoren, sowie des von den Rotoren zu leistenden Schubs, erfolgt dabei nach folgendem Schema:

a) Erstellen einer Steuereinflussmatrix der Rotoren:

Abhängig von der Geometrie des Multikopters und den Propellerkennwerten wird eine Matrix bestimmt, die bei Multiplikation mit einem Vektor der einzelnen Rotorschubkräfte ($F_1$ bis $F_i$) die auf den Multikopter wirkenden Körperfesten Drehmomente ($M_x$, $M_y$, $M_z$) sowie den Gesamtschub ($T$) ergibt:

$$\begin{pmatrix} M_x \\ M_y \\ M_z \\ T \end{pmatrix} = \left( \text{Steuere inf lussmatrix} \right) \cdot \begin{pmatrix} F_1 \\ \vdots \\ F_i \end{pmatrix}$$

Die Ausfallsituation wird in der Steuereinflussmatrix dadurch berücksichtigt, dass die Einträge der entsprechenden Spalte des ausgefallenen Rotors bzw. der ausgefallenen Rotoren entsprechend auf null gesetzt werden.

b) Invertieren der Steuereinflussmatrix:

Zur Bestimmung der Rotoransteuerung abhängig von kommandierten Momenten und dem kommandierten Gesamtschub muss die Steuereinflussmatrix invertiert werden. Die invertierte Steuereinflussmatrix wird im Folgenden als Steuertabelle bezeichnet. Die Ansteuerung der Rotoren bzw. ihrer jeweiligen Antriebseinheiten erfolgt dann nach dem folgenden Schema:

$$\begin{pmatrix} F_1 \\ \vdots \\ F_i \end{pmatrix} = \left( \text{Steuertabelle} \right) \cdot \begin{pmatrix} M_x \\ M_y \\ M_z \\ T \end{pmatrix}$$

c) Bestimmung des maximal möglichen Abfluggewichtes bzw. des maximal möglichen Gesamtschubes abhängig von den geforderten Steuermomenten in der roll-, pitch- und yaw-Achse:

Diese Steuermomente werden hier zur genaueren Definition der Regelungsreserve anstelle der zunächst pauschal veranschlagten 10% Regelungsreserve verwendet. Zu diesem Zweck wird untersucht, welcher Rotor bei Aufbringen der Steuermomente bei welchem Gesamtschubkommando zuerst in Sättigung geht. Sättigung kann das Erreichen des Maximal- oder des Minimalschubes eines Rotors bedeuten.

d) Optimierung der Steuertabelle, sodass der unter c) bestimmte Maximalschub maximiert wird:

Nachdem die Steuertabelle in einem unterbestimmten Gleichungssystem bestimmt wird, existieren abhängig von der Rotoranordnung und -anzahl (unendlich) viele Lösungen. Ziel der Optimierung ist es, diejenige Lösung zu finden, die größtmöglichen Maximalschub bei den geforderten Steuermomenten als Regelungsreserve ermöglicht.

e) Ansteuern der Rotoren gemäß der Steuertabelle.

In Bezug auf die Schritte c) und d) kann das Invertieren der Steuereinflussmatrix und Optimieren der Steuertabelle zunächst durch Anwendung der Pseudoinversen (Moore-Penrose-Inverse) erfolgen. Hierbei wird eine Lösung des unterbestimmten Gleichungssystems mit kleinster euklidischer Norm bestimmt. Dieses Verfahren ist dem Fachmann bekannt und in einschlägiger Standardliteratur erläutert (vgl, bspw. Kapitel 2, insbesondere § 8, Seite 94 ff. in Koecher, Max: Lineare Algebra und analytische Geometrie, Springer-Verlag Berlin, 1997). Die auf dieser Basis bestimmte Steuertabelle ergibt im Regelfall eine Lösung, mit der der Ausfall eines Rotors durch die verbleibenden Rotoren weitgehend kompensiert werden kann. Die mit diesem Verlahren bestimmte Steuertabelle ist nur von der Steuereinflussmatrix abhängig, da sie durch Inversion aus dieser entsteht. Nicht berücksichtigt sind aus diesem Grund weitere für einen Multikopter wichtige Einflüsse, wie beispielsweise Sättigungen der Antriebseinheiten. D.h. es wird eine Lösung bestimmt ohne zu Überprüfen, ob beispielsweise ausreichend Schub der einzelnen Rotoren zu Verfügung steht.

Die auf dieser Basis bestimmte Steuertabelle sowie der nach c) bestimmte Maximalschub können nun im nächsten Schritt als Referenz verwendet werden. Zur Optimierung der Steuertabelle können für einzelne oder alle Spalten alternative Lösungen bestimmt werden. Die spaltenweise Optimierung erfolgt, indem jeweils alle Kommandos, bis auf das zur jeweiligen Spalte korrespondierende Kommando, auf null gesetzt werden und eine Startlösung des Gleichungssystems für diesen Fall berechnet wird. Zu dieser Startlösung kann ein beliebiger Vektor aus dem Nullraum, dem Lösungsraum des Gleichungssystems, addiert werden. Auch dieses Verfahren ist dem Fachmann zur Lösung inhomogener Gleichungssysteme bekannt und kann ebenfalls einschlägiger Standardliteratur entnommen werden (vgl. bspw. Kapitel 6, Seite 250 ff. in Meyberg, Kurt / Vachenauer, Peter: Höhere Mathematik 1, Springer 2001). Die so entstehenden Lösungen können im nächsten Schritt auf verschiedene Kriterien hin untersucht und ausgewählt werden. Anzuwenden sind unter anderem Einschränkungen aufgrund von Sättigungen der Antriebe. Darüber hinaus können verschiedene Motoren unterschiedlich zu verschiedenen Steuerkommandos beitragen. Die berechnete Lösung ist dann die Schubverteilung auf alle Motoren abhängig vom aufgebrachten Kommando. Die bestimmte Lösung kann im nächsten Schritt, nachdem zur Bestimmung alle Kommandos, bis auf das zur jeweiligen Spalte korrespondierende Kommando, auf null gesetzt wurden, auf die Einträge der entsprechenden Spalte zurück gerechnet werden. Die optimierten Spalten werden schließlich wieder zu einer Steuertabelle zusammensetzt. In diesem Optimierungsschritt sowie bei der Bestimmung des Maximalschubes nach c) wird erfindungsgemäß die Beschränkung auf positiven Schub (üblicherweise auf einen Bereich von ca. 5-100% des möglichen Rotorschubbereichs) aufgehoben und dieser Bereich durch negativen Schub erweitert. Die Optimierung ist dabei abhängig von der Anzahl und Anordnung der Rotoren.

Multikopter mit sechs Rotoren (Hexakopter):

In einer speziellen Ausführungsform umfasst das Verfahren das Bereitstellen von sechs Rotoren, wobei bei Ausfall eines Rotors einer der verbleibenden Rotoren derart angesteuert wird, dass er das von den übrigen Rotoren erzeugte Yaw-Moment ausgleicht, indem er zumindest zeitweise entgegen seiner Solldrehrichtung dreht. Insbesondere können die Rotoren mit alternierender Solldrehrichtung in Form eines Sechsecks angeordnet sein, wobei bei Ausfall eines Rotors der diesem bezüglich des Schwerpunkts des Multikopters gegenüberliegende Rotor, der Ausgleichsrotor in diesem Fall, derart angesteuert wird, dass er das von den übrigen Rotoren erzeugte Yaw-Moment ausgleicht, indem er zumindest zeitweise entgegen seiner Solldrehrichtung dreht.

Wie bereits erläutert, führt der Ausfall eines Rotors bei einem derartigen Hexakopter dazu, dass sich zwei Rotoren mit gleicher Solldrehrichtung nebeneinander befinden. Somit hat die Steuerung einer Nick- oder Rollbewegung des Hexakopters in einer solchen Situation zwangsläufig eine Drehung um die Hochachse zur Folge. Diese Drehung um die Hochachse kann nun erfindungsgemäß kompensiert werden, indem der Ausgleichsrotor derart angesteuert wird, dass er zumindest zeitweise entgegen seiner Solldrehrichtung dreht, wobei das vom Ausgleichsrotor erzeugte Drehmoment ausgenutzt wird, um die Yaw-Achse zu stabilisieren.

Das aus dem Ausgleichsrotor resultierende Fehlermoment in roll und pitch kann von den anderen Rotoren einfach und durch minimale Leistungskorrektur kompensiert werden. Hierzu kann die vom Ausgleichsrotor hervorgerufene Änderung in roll und pitch zum einen durch einen Lageregler als Störung in diesen Achsen identifiziert werden und die Ansteuerung der übrigen Rotoren im Sinne einer Regelungsschleife entsprechend angepasst werden. Zum anderen kann der Einfluss des Ausgleichsrolors für die jeweiligen Kommandos bereits im Voraus berechnet werden und in die Ansteuerung der übrigen Rotoren feed-forward einfließen. Das bedeutet, bei der Ansteuerung der übrigen Rotoren kann der Einfluss des Ausgleichsrotors auf die Roll- und Pitch-Kommandos bereits feed-forward berücksichtigt werden.

Für den beschriebenen Fall des Hexakopters ermittelt sich die resultierende Auftriebsleistung wie folgt: Im Redundanzfall stehen 4 Rotoren mit voller Leistung zur Verfügung, da diese symmetrisch zum Schwerpunkt angeordnet sind. Die Auftriebsleistung des Ausgleichsrotors kann vernachlässigt werden, da dieser näherungsweise nur das Yaw-Moment beeinflusst. Somit stehen bei dieser Ausführungsform bei Ausfall eines Rotors 4/6, d. h. 67% des Schubes zur Verfügung. Abzüglich einer Regelungsreserve von 10% ergeben sich somit als maximales Abfluggewicht 60% des installierten Gesamtschubes. Verglichen mit dem maximalen Abfluggewicht der Y-Anordnung des Hexakopters der WO 2008/000203 (45%) ist dies eine Steigerung um 33%. Mit anderen Worten, durch eine Sechseckanordnung in Verbindung mit der erfindungsgemäßen Lehre kann die maximale Tragkraft im Redundanzfall um 33% im Vergleich zum Stand der Technik gesteigert werden. Eine Sechseckanordnung wird durch die erfindungsgemäße zeitweise Drehrichtungsumkehr zudem erst redundanzfähig.

Ebenfalls durch die Erfindung bereitgestellt wird ein Multikopter mit verbesserten Flugeigenschaften in einer Ausfallsituation, aufweisend zumindest sechs Rotoren mit jeweils definierter Solldrehrichtung und eine Steuerungselektronik mit hinterlegtem Steuerprogramm, wobei die Steuerungselektronik eingerichtet ist

- zum Ansteuern der Rotoren mit derart, dass sie gemäß ihrer jeweiligen Solldrehrichtung drehen, und
- zum Ansteuern in der Ausfallsituation zumindest eines der verbleibenden Rotoren derart, dass er zumindest zeitweise entgegen seiner Solldrehrichtung dreht.

Optional sind dabei die Rotoren um den Schwerpunkt des Multikopters, insbesondere in einer Ebene, angeordnet. Weiter optional sind die Rotoren im Wesentlichen waagerecht angeordnet. Ferner können die Rotoren mit alternierender Solldrehrichtung angeordnet sein.

In einer Ausführungsform umfasst der Multikopter sechs Rotoren, die mit alternierender Solldrehrichtung in Form eines Sechsecks angeordnet sind.

Die Erfindung soll nun anhand der angehängten Zeichnungen näher erläutert werden, die - beispielhaft - spezielle Ausführungsformen zeigen, wobei gilt:

Fig. 1 ist eine schematische Abbildung einer Beispielkonfiguration eines Multikopters (Oktokopters), anhand derer das erfindungsgemäße Verfahren beispielhaft erläutert wird.

Fig. 2 ist eine schematische Abbildung einer Beispielkonfiguration eines Hexakopters, anhand derer das erfindungsgemäße Verfahren beispielhaft erläutert wird.

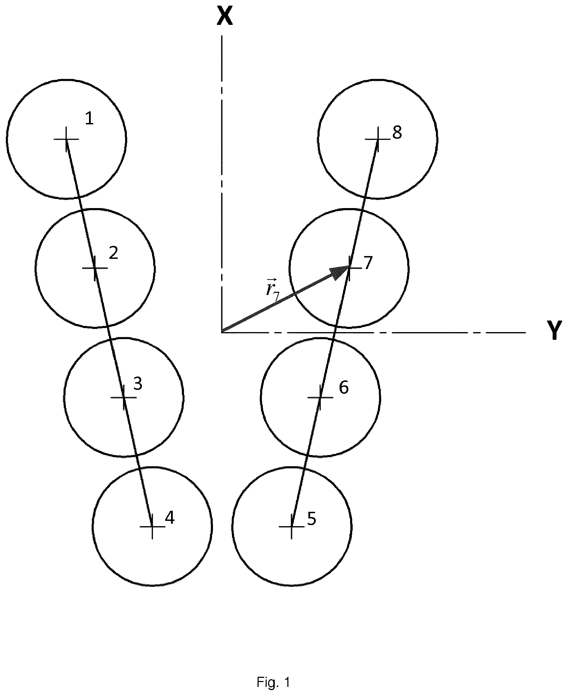

Fig. 1 zeigt die schematische Draufsicht auf einen Oktokopter mit V-förmiger Anordnung der Rotoren, wie beispielsweise in der DE 10 2008 014 853 offenbart. Das von einem Rotor i aufgrund seiner Schubkraft $F_i$ auf den Multikopter erzeugte Moment $M_i$ kann wie folgt berechnet werden:

$$\mathbf{M}_i = \mathbf{r}_i \times \mathbf{F}_i$$

$r_i$, bezeichnet dabei die Position des Rotors bezogen auf den Schwerpunkt des Multikopters.

Ebenfalls in Fig. 1 gezeigt ist ein kartesisches Koordinatensystem. Für die Rotorpositionen in diesem Koordinatensystem gilt:

$$\mathbf{r}_1 = \begin{pmatrix} 0,31 \\ -0,28 \\ 0 \end{pmatrix} \quad \mathbf{r}_2 = \begin{pmatrix} 0,15 \\ -0.24 \\ 0 \end{pmatrix} \quad \mathbf{r}_3 = \begin{pmatrix} -0.15 \\ -0.17 \\ 0 \end{pmatrix} \quad \mathbf{r}_4 = \begin{pmatrix} -0.31 \\ -0.13 \\ 0 \end{pmatrix}$$

$$\mathbf{r}_5 = \begin{pmatrix} -0.31 \\ 0.13 \\ 0 \end{pmatrix} \quad \mathbf{r}_6 = \begin{pmatrix} -0.15 \\ 0.17 \\ 0 \end{pmatrix} \quad \mathbf{r}_7 = \begin{pmatrix} 0.15 \\ 0.24 \\ 0 \end{pmatrix} \quad \mathbf{r}_8 = \begin{pmatrix} 0.31 \\ 0.28 \\ 0 \end{pmatrix}$$

Das Gesamtmoment lässt sich damit wie folgt ausdrücken:

$$\mathbf{M} = \begin{pmatrix} M_{roll} \\ M_{pitch} \end{pmatrix} = \begin{pmatrix} \mathbf{r}_1 \times \begin{pmatrix} 0 \\ 0 \\ -F_1 \end{pmatrix} & \mathbf{r}_2 \times \begin{pmatrix} 0 \\ 0 \\ -F_2 \end{pmatrix} & \dots & \mathbf{r}_8 \times \begin{pmatrix} 0 \\ 0 \\ -F_8 \end{pmatrix} \end{pmatrix}$$

Zur Berücksichtigung des Hochachsdrehmoments kann eine einfache Umrechnung zwischen Schub und Drehmoment eingeführt werden:

$$M_{z,i} = F_i \cdot k_m$$

$$k_m = \frac{c_P \cdot D_{Prop}}{c_T \cdot 2\pi} = 0.017\,\mathrm{m}$$

Der Umrechnungsfaktor $k_m$ ist rein exemplarisch und propellerabhängig. Er kann aus den Schub- und Leistungsbeiwerten sowie dem Propellerdurchmesser bestimmt werden. Abhängig von der Rotordrehrichtung wird das Hochachsdrehmoment eines Rotors mit -1 multipliziert. Zusätzlich kann der Gesamtschub T aller Rotoren in der Steuereinflussmatrix ergänzt werden. Diese hat somit folgende Form:

$$
\begin{pmatrix} M_x \\ M_y \\ M_z \\ T \end{pmatrix} = \begin{pmatrix} -0.27 & -0.24 & -0.17 & -0.13 & 0.13 & 0.17 & 0.24 & 0.27 \\ 0.31 & 0.15 & -0.15 & -0.31 & -0.31 & -0.15 & 0.15 & 0.31 \\ -0.017 & 0.017 & -0.017 & 0.017 & -0.017 & 0.017 & -0.017 & 0.017 \\ 1 & 1 & 1 & 1 & 1 & 1 & 1 & 1 \end{pmatrix} \cdot \begin{pmatrix} F_1 \\ F_2 \\ F_3 \\ F_4 \\ F_5 \\ F_6 \\ F_7 \\ F_8 \end{pmatrix}
$$

Betrachtet wird nun beispielhalber ein Ausfall von Rotor 8. In der Steuereinflussmatrix kann somit die 8. Spalte gestrichen bzw. auf null gesetzt werden:

$$
\begin{pmatrix} M_x \\ M_y \\ M_z \\ T \end{pmatrix} = \begin{pmatrix} -0.27 & -0.24 & -0.17 & -0.13 & 0.13 & 0.17 & 0.24 & 0 \\ 0.31 & 0.15 & -0.15 & -0.31 & -0.31 & -0.15 & 0.15 & 0 \\ -0.017 & 0.017 & -0.017 & 0.017 & -0.017 & 0.017 & -0.017 & 0 \\ 1 & 1 & 1 & 1 & 1 & 1 & 1 & 0 \end{pmatrix} \cdot \begin{pmatrix} F_1 \\ F_2 \\ F_3 \\ F_4 \\ F_5 \\ F_6 \\ F_7 \\ F_8 \end{pmatrix}
$$

Wird nun zur Bestimmung der Rotoransteuerung die Steuereinflussmatrix invertiert, entsteht ein Gleichungssystem mit 4 Gleichungen und 7 Variablen. Es verbleiben somit 3 Freiheitsgrade zur Optimierung der Lösung. Eine erste sinnvolle Lösung kann durch Inversion über die Pseudoinverse bestimmt werden. Die Berechnung liefert dabei folgende Werte:

$$
\begin{pmatrix} F_1 \\ F_2 \\ F_3 \\ F_4 \\ F_5 \\ F_6 \\ F_7 \\ F_8 \end{pmatrix} = \begin{pmatrix} -0.70 & 0.67 & -6.54 & 0.13 \\ -0.40 & 0.62 & 11.4 & 0.18 \\ -0.83 & -0.70 & -10.99 & 0.05 \\ -0.53 & -0.76 & 6.97 & 0.11 \\ 0.23 & -0.82 & -9.78 & 0.09 \\ 0.93 & 0.14 & 11.93 & 0.21 \\ 1.30 & 0.85 & -3.00 & 0.22 \\ 0 & 0 & 0 & 0 \end{pmatrix} \cdot \begin{pmatrix} M_x \\ M_y \\ M_z \\ T \end{pmatrix}
$$

Ausschlaggebend für die Gesamttragkraft ist dabei zunächst die Schubverteilung, anhand derer zusammen mit dem Maximalschub eines Rotors der Gesamtschub im Redundanzfall bestimmt werden kann. Praktische Erfahrungen haben ergeben, dass die im Beispiel verwendeten Rotoren in einem Schubbereich von 0,1 N bis 3.85 N sinnvoll und mit geringer Reaktionszeit angesteuert werden können. Anstelle einer pauschalen Regelungsreserve werden geforderte Steuermomente der anderen Achsen untersucht. Gefordert wird für die Auslegung dieses Modells ein Steuermoment von 0,1 Nm für Roll und Pitch sowie ein zusätzliches Moment von 0,02 Nm in der Yaw-Achse.

Betrachtet wird auf Basis der kommandierten Momente der maximal mögliche Schub des Gesamtsystems, ohne dass einer der Rotoren in Sättigung geht, d. h. seinen Maximal- oder Minimalschub erreicht. Zu diesem Zweck können aus allen möglichen Kombinationen der Steuermomente mit unterschiedlichem Vorzeichen die maximalen Gesamtschubkräfte berechnet werden. Das Abfluggewicht des Systems darf dann das Minimum dieser Berechnung nicht übersteigen. Die Berechnung wird für alle Kombinationen durchgeführt. Erreicht wird das Minimum bei folgender Kom-

bination der Steuermomente: $(M_{roll}\ M_{pitch}\ M_{yaw})^T =(0.1\ 0.1\ 0.02)^T$. Das berechnete maximale Abfluggewicht kann mit diesen Steuerkommandos zu 16,37 N berechnet werden.

Die maximale Traglast kann durch die spaltenweise Optimierung der Steuertabelle nach d) des obigen Schemas erhöht werden. Randbedingungen sind der maximale, sowie der minimale Schub der Rotoren bzw. das Schubkommando, bei dem der Rotor in Sättigung geht.

Erfindungsgemäß kann nun das untere Limit der Rotoren durch die Möglichkeit, Rotoren in Ausfallsituationen umzukehren, aufgehoben werden. Es kann somit eine Optimierung bei Wegfall der Randbedingung durchgeführt und damit in dieser Ausführungsform der Erfindung der Gesamtschub durch das Aufbringen von negativem Schub auf einen der Rotoren erhöht werden. Die Optimierung der für den Schub relevanten Spalte der Steuertabelle erfolgt dabei so, dass größtmöglicher Gesamtschub auch bei Aufbringung der geforderten Steuermomente erreicht wird, ohne dass einer der Rotoren mit einem Wert größer seinem Maximalschub angesteuert wird. Erreicht wird dies, indem sechs der Rotoren mit sehr großem, bei fünf Rotoren nahezu gleichem Schubanteil angesteuert werden. Damit können diese Rotoren auf voller Leistung laufen und tragen somit voll zum Gesamtschub bei. Das dadurch entstehende Fehlermoment wird direkt vom Ausgleichsrotor durch negativen Schub und entsprechendes Drehmoment ausgeglichen.

Für den in Fig. 1 dargestellten Fall liefert die Optimierung dabei folgende Ergebnisse:

$$\begin{pmatrix} F_1 \\ F_2 \\ F_3 \\ F_4 \\ F_5 \\ F_6 \\ F_7 \\ F_8 \end{pmatrix} = \begin{pmatrix} -0.70 & 0.67 & -0.99 & 0.18 \\ -0.40 & 0.62 & 4.63 & 0.19 \\ -0.83 & -0.70 & -22.62 & -0.06 \\ -0.53 & -0.76 & 22.63 & 0.12 \\ 0.23 & -0.82 & -9.91 & 0.19 \\ 0.93 & 0.14 & 3.05 & 0.19 \\ 1.30 & 0.85 & 3.21 & 0.19 \\ 0 & 0 & 0 & 0 \end{pmatrix} \cdot \begin{pmatrix} M_x \\ M_y \\ M_z \\ T \end{pmatrix}$$

Mit der optimierten Steuermatrix kann wieder das maximale Abfluggewicht bei den geforderten Steuermomenten $(M_{roll},\ M_{pitch}\ M_{yaw})^T =(0.1\ 0.1\ 0.02)^T$ berechnet werden. Es liegt im gegebenen Fall bei 18,83 N. Verglichen mit der Lösung ohne Rotorumkehr (16,37 N) ist dies eine Steigerung um 15 %.

Die einzelnen Rotoren bekommen in dieser Flugsituation folgende Kommandos:

$$\begin{pmatrix} F_1 \\ F_2 \\ F_3 \\ F_4 \\ F_5 \\ F_6 \\ F_7 \\ F_8 \end{pmatrix} = \begin{pmatrix} -0.70 & 0.67 & -0.99 & 0.18 \\ -0.40 & 0.62 & 4.63 & 0.19 \\ -0.83 & -0.70 & -22.62 & -0.06 \\ -0.53 & -0.76 & 22.63 & 0.12 \\ 0.23 & -0.82 & -9.91 & 0.19 \\ 0.93 & 0.14 & 3.05 & 0.19 \\ 1.30 & 0.85 & 3.21 & 0.19 \\ 0 & 0 & 0 & 0 \end{pmatrix} \cdot \begin{pmatrix} 0.1 \\ 0.1 \\ 0.02 \\ 18.83 \end{pmatrix} = \begin{pmatrix} 3.46 \\ 3.67 \\ -1.82 \\ 2.61 \\ 3.32 \\ 3.74 \\ 3.85 \\ 0 \end{pmatrix}$$

Deutlich erkennbar ist in der Steuereinflussmatrix der negative Eintrag für den Schub von Rotor 3. Aufgrund dieses Eintrages wird der Rotor auf negativen Schub geschaltet und erfindungsgemäß durch diesen negativen Schub eines Rotors der Gesamtschub des Flugsystems erhöht.

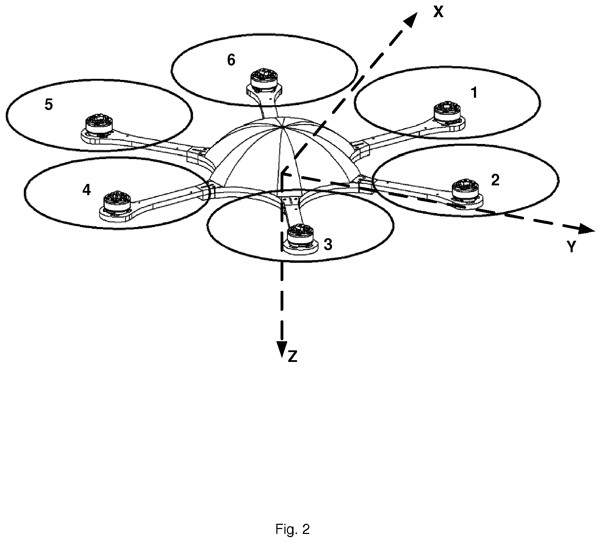

Fig. 2 zeigt einen Hexakopter, bei dem die Rotoren 1 bis 6 mit alternierender Solldrehrichtung in Form eines Sechsecks angeordnet sind. Zu Demonstrationszwecken wird nun angenommen, dass Rotor 6 ausfällt. Es fehlt damit sowohl dessen Auftriebsleistung als auch dessen Drehmoment. Dies führt ohne Kompensation zu einer Kippung des Hexakopters sowie zu einer Drehung um die Hochachse aufgrund der überschüssigen Leistung des gegenüberliegenden Rotors 3. Eine erste Notwendigkeit wäre daher eine Drosselung der Leistung bzw. Abschaltung des Rotors 3.

Nach Abschaltung des Rotors 3 liegen jeweils zwei Rotoren mit gleicher Solldrehrichtung nebeneinander, nämlich die Rotoren 2 und 4 und die Rotoren 1 und 5. Dies hat zur Folge, dass zur Steuerung einer Nick- oder Rollbewegung des Hexakopters zwei Rotoren mit gleicher Drehrichtung beschleunigt bzw. abgebremst werden müssen, woraus ein Drehmoment um die Hochachse resultiert. Mit anderen Worten, ein Roll- oder Pitch-Kommando erzeugt ein starkes Yaw-Moment, so dass die Flugeigenschaften des Hexakopters nicht mehr vernünftig steuerbar sind. Insbesondere ist es nicht mehr möglich, die verschiedenen Steuerfunktionen entkoppelt voneinander anzusteuern.

Zur Lösung dieses Problems wird nun gemäß einer Ausführungsform der Erfindung die Hochachse des Hexakopters dadurch stabilisiert, dass das von den Rotoren 2 und 4 bzw. 1 und 5 erzeugte Drehmoment um die Hochachse bei Steuerung einer Roll- oder Nickbewegung durch jeweiliges Beschleunigen des Ausgleichsrotors 3 kompensiert wird. Dazu wird der Ausgleichsrotor entweder in (Ausgleich des Moments der Rotoren 2 und 4) oder entgegen (Ausgleich des Moments der Rotoren 1 und 5) seiner Solldrehrichtung beschleunigt. Mit anderen Worten, der Ausgleichsrotor 3 wird derart angesteuert, dass er das von den übrigen Rotoren erzeugte Yaw-Moment ausgleicht, indem er zumindest zeitweise entgegen seiner Solldrehrichtung dreht.

Das aus dem Ausgleichsrotor resultierende Fehlermoment in roll und pitch kann von den anderen Rotoren einfach und durch minimale Leistungskorrektur kompensiert werden. Hierzu kann die vom Ausgleichsrotor hervorgerufene Änderung in roll und pitch zum einen durch einen Lageregler als Störung in diesen Achsen identifiziert werden und die Ansteuerung der übrigen Rotoren im Sinne einer Regelungsschleife entsprechend angepasst werden. Zum anderen kann der Einfluss des Ausgleichsrotors für die jeweiligen Kommandos bereits im Voraus berechnet werden und in die Ansteuerung der übrigen Rotoren feed-forward einfließen. Das bedeutet, bei der Ansteuerung der übrigen Rotoren kann der Einfluss des Ausgleichsrotors auf die Roll- und Pitch-Kommandos bereits feed-forward berücksichtigt werden. Die hierfür notwendige Ansteuerung der Motoren kann analog dem dargestellten Verfahren a) -e) durchgeführt werden. In diesem Fall wird die Optimierung der Steuertabelle so durchgeführt, dass erfindungsgemäß zeitweise negativer Schub an den Ausgleichsrotor kommandiert wird. Darüber hinaus erfolgt die Optimierung so, dass der Gesamtschub auf die anderen vier Antriebseinheiten verteilt wird. Die Spalten der Steuertabelle für die Kommandos in roll ($M_x$) und pitch ($M_y$) werden so optimiert, dass die Steuermomente von den vier verbleibenden Rotoren aufgebracht werden. Darüber hinaus wird das entstehende Fehlermoment in der Yaw-Achse durch den Ausgleichsrotor direkt ausgeglichen, wobei dessen Fehlermoment in roll und pitch ebenfalls direkt durch die anderen vier Rotoren kompensiert wird. Die Spalte für das Yaw-Kommando hingegen wird so optimiert, dass das erforderliche Drehmoment vom Ausgleichsrotor durch zeitweise negative Solldrehzahlkommandos aufgebracht wird und das entstehende Fehlermoment in den anderen Achsen direkt durch die verbleibenden vier Antriebseinheiten kompensiert wird. Das Ergebnis dieser Optimierung ist, dass in jeder Achse ein entkoppeltes Kommando gegeben werden kann, ohne andere Steuerfunktionen zu beeinflussen. Es müssen somit bei dieser Ausführungsform keine auftretenden Fehlermomente analog zu Störungen durch den Regelkreis kompensiert werden.

Im Ergebnis, unabhängig davon ob Fehlermomente direkt feed-forward oder durch die Regelschleife kompensiert werden, wird es durch die erfindungsgemäße, zeitweise Ansteuerung des Ausgleichsrotors mit negativer Solldrehzahl ermöglicht, den Hexakopter auch bei Ausfall eines Rotors mit den Kommandos Roll, Pitch und Yaw zu fliegen. Die Steuerung dieser Kommandos ist entkoppelt d.h. unabhängig voneinander möglich.

Die Erfindung kann insbesondere bei Ausfall eines einzelnen Rotors angewandt werden, ist jedoch nicht hierauf beschränkt. Der Fachmann versteht, dass je nach Bauart und Ausstattung eines Multikopters, insbesondere hinsichtlich Rotoranzahl und -anordnung, der Ausfall unterschiedlich vieler Rotoren unterschiedlich gut kompensiert werden kann. Für einen gegebenen Multikopter wird der Fachmann idealerweise im Voraus die verschiedenen möglichen Ausfallsituationen berechnen und entsprechende Steuerprogramme in der Steuerungselektronik hinterlegen.

Im Folgenden werden verschiedene, nicht beanspruchte Beispiele dargestellt:

1. Verfahren zur Verbesserung der Flugeigenschaften eines Multikopters in einer Ausfallsituation, umfassend Bereitstellen eines Multikopters umfassend zumindest sechs Rotoren mit jeweils definierter Solldrehrichtung, Ansteuern der Rotoren derart, dass sie gemäß ihrer jeweiligen Solldrehrichtung drehen, dadurch gekennzeichnet, dass in der Ausfallsituation zumindest einer der verbleibenden Rotoren derart angesteuert wird, dass er zumindest zeitweise entgegen seiner Solldrehrichtung dreht.

2. Verfahren nach Ausführungsform 1, dadurch gekennzeichnet, dass die Rotoren um den Schwerpunkt des Multikopters angeordnet sind.

3. Verfahren nach einer der vorherigen Ausführungsformen, dadurch gekennzeichnet, dass die Rotoren in einer Ebene angeordnet sind.

4. Verfahren nach einer der vorherigen Ausführungsformen, dadurch gekennzeichnet, dass die Rotoren waagerecht angeordnet sind.

5. Verfahren nach einer der vorherigen Ausführungsformen, dadurch gekennzeichnet, dass die Rotoren mit alternierender Solldrehrichtung angeordnet sind.

6. Verfahren nach einer der vorherigen Ausführungsformen, umfassend die Schritte:

a) Erstellen einer Steuereinflussmatrix der Rotoren;
b) Invertieren der Steuereinflussmatrix;
c) Bestimmung des maximal möglichen Gesamtschubs abhängig von den geforderten Steuermomenten in der roll-, pitch- und yaw-Achse;
d) Optimierung der Steuertabelle, sodass der unter c) bestimmte Gesamtschub maximiert wird;
e) Ansteuern der Rotoren gemäß der Steuertabelle,

7. Verfahren nach einer der vorherigen Ausführungsformen, umfassend Bereitstellen eines Multikopters umfassend zumindest acht Rotoren mit jeweils definierter Solldrehrichtung, Ansteuern der Rotoren derart, dass sie gemäß ihrer jeweiligen Solldrehrichtung drehen, dadurch gekennzeichnet, dass in der Ausfallsituation zumindest einer der verbleibenden Rotoren derart angesteuert wird, dass er entgegen seiner Solldrehrichtung dreht.

8. Verfahren nach einer der Ausführungsformen 1 bis 6, umfassend Bereitstellen eines Multikopters umfassend sechs Rotoren mit jeweils definierter Solldrehrichtung, Ansteuern der Rotoren derart, dass sie gemäß ihrer jeweiligen Solldrehrichtung drehen, dadurch gekennzeichnet, dass in der Ausfallsituation einer der verbleibenden Rotoren derart angesteuert wird, dass er das von den übrigen Rotoren erzeugte Yaw-Moment ausgleicht, indem er zumindest zeitweise entgegen seiner Solldrehrichtung dreht.

9. Verfahren nach Ausführungsform 8, dadurch gekennzeichnet, dass der zumindest zeitweise entgegen seiner Solldrehrichtung drehende Rotor zusätzlich ein kommandiertes Yaw-Moment erzeugt.

10. Verfahren nach Ausführungsform 8 oder 9, dadurch gekennzeichnet, dass die Rotoren mit alternierender Solldrehrichtung in Form eines Sechsecks angeordnet sind, wobei der dem ausgefallenen Rotor bezüglich des Schwerpunkts des Multikopters gegenüberliegende Rotor derart angesteuert wird, dass er das von den übrigen Rotoren erzeugte Yaw-Moment ausgleicht, indem er zumindest zeitweise entgegen seiner Solldrehrichtung dreht.

11. Multikopter mit verbesserten Flugeigenschaften in einer Ausfallsituation, umfassend zumindest sechs Rotoren mit jeweils definierter Solldrehrichtung, sowie eine Steuerungselektronik mit hinterlegtem Steuerprogramm, das in der Ausfallsituation zumindest einen der verbleibenden Rotoren derart ansteuert, dass er zumindest zeitweise entgegen seiner Solldrehrichtung dreht.

12. Multikopter nach Ausführungsform 11, dadurch gekennzeichnet, dass die Rotoren um den Schwerpunkt des Multikopters angeordnet sind.

13. Multikopter nach einer der Ausführungsformen 11 oder 12, dadurch gekennzeichnet, dass die Rotoren in einer Ebene und/oder waagerecht angeordnet sind.

14. Multikopter nach einer der Ausführungsformen 11 bis 13, dadurch gekennzeichnet, dass die Rotoren mit alternierender Solldrehrichtung angeordnet sind.

15. Multikopter nach einer der Ausführungsformen 11 bis 14, umfassend sechs Rotoren, die mit alternierender Solldrehrichtung in Form eines Sechsecks angeordnet sind.

**Patentansprüche**

1. Verfahren zur Verbesserung der Flugeigenschaften eines Multikopters in einer Ausfallsituation, wobei der Multikopter zumindest sechs Rotoren mit jeweils definierter Solldrehrichtung umfasst und eine Steuerungselektronik mit hinterlegtem Steuerprogramm, das Verfahren aufweisend:

• Ansteuern der Rotoren mit der Steuerungselektronik derart, dass sie gemäß ihrer jeweiligen Solldrehrichtung drehen,
• in der Ausfallsituation Ansteuern zumindest eines der verbleibenden Rotoren mit der Steuerungselektronik derart, dass er zumindest zeitweise entgegen seiner Solldrehrichtung dreht.

**2.** Verfahren nach Anspruch 1, **dadurch gekennzeichnet, dass** die Rotoren um den Schwerpunkt des Multikopters angeordnet sind.

**3.** Verfahren nach einem der vorherigen Ansprüche, **dadurch gekennzeichnet, dass** die Rotoren in einer Ebene und/oder waagerecht angeordnet sind.

**4.** Verfahren nach einem der vorherigen Ansprüche, **dadurch gekennzeichnet, dass** die Rotoren mit alternierender Solldrehrichtung angeordnet sind

**5.** Verfahren nach einem der vorherigen Ansprüche, wobei der Multikopter mindestens acht Rotoren mit jeweils definierter Solldrehrichtung umfasst.

**6.** Verfahren nach einem der Ansprüche 1 bis 4, wobei der wobei der Multikopter mindestens sechs Rotoren mit jeweils definierter Solldrehrichtung umfasst, wobei in der Ausfallsituation einer der verbleibenden Rotoren derart angesteuert wird, dass er das von den übrigen Rotoren erzeugte Yaw-Moment ausgleicht, indem er zumindest zeitweise entgegen seiner Solldrehrichtung dreht.

**7.** Verfahren nach Anspruch 6, **dadurch gekennzeichnet, dass** der zumindest zeitweise entgegen seiner Solldrehrichtung drehende Rotor zusätzlich ein kommandiertes Yaw-Moment erzeugt.

**8.** Verfahren nach Anspruch 6 oder 7, **dadurch gekennzeichnet, dass** die Rotoren mit alternierender Solldrehrichtung in Form eines Sechsecks angeordnet sind, wobei der dem ausgefallenen Rotor bezüglich des Schwerpunkts des Multikopters gegenüberliegende Rotor derart angesteuert wird, dass er das von den übrigen Rotoren erzeugte Yaw-Moment ausgleicht, indem er zumindest zeitweise entgegen seiner Solldrehrichtung dreht.

**9.** Multikopter mit verbesserten Flugeigenschaften in einer Ausfallsituation, aufweisend zumindest sechs Rotoren mit jeweils definierter Solldrehrichtung und eine Steuerungselektronik mit hinterlegtem Steuerprogramm, wobei die Steuerungselektronik eingerichtet ist

zum Ansteuern der Rotoren derart, dass sie gemäß ihrer jeweiligen Solldrehrichtung drehen, und
zum Ansteuern in der Ausfallsituation zumindest eines der verbleibenden Rotoren derart, dass er zumindest zeitweise entgegen seiner Solldrehrichtung dreht.

**10.** Multikopter nach Anspruch 9, **dadurch gekennzeichnet, dass** die Rotoren in einer Ebene und/oder waagerecht angeordnet sind.

**11.** Multikopter nach einem der Ansprüche 9 bis 10, **dadurch gekennzeichnet, dass** die Rotoren mit alternierender Solldrehrichtung angeordnet sind.

**12.** Multikopter nach einem der Ansprüche 9 bis 11, **dadurch gekennzeichnet, dass** die Rotoren auf Trägerelementen angeordnet sind, wobei die Trägerelemente miteinander durch Verstrebungselemente verbunden sind.

**13.** Multikopter nach Anspruch 12, weiter aufweisend ein Rumpfelement nahe dem Schwerpunkt des Multikopters, wobei das Rumpfelement mit den Trägerelementen oder Verstrebungselementen verbunden ist.

**14.** Multikopter nach einem der Ansprüche 9 bis 13, aufweisend acht Rotoren, die in einer V-förmigen Anordnung angeordnet sind.

**15.** Multikopter nach einem der Ansprüche 9 bis 13, aufweisend gleich viele Rotoren mit einer ersten definierten Solldrehrichtung wie Rotoren mit einer zweiten definierten Solldrehrichtung wobei die erste Solldrehrichtung entgegengesetzt zur zweiten Solldrehrichtung ist.


**Claims**

**1.** Method for improving the flight characteristics of a multicopter in a failure situation, wherein the multicopter comprises at least six rotors, each with a defined nominal rotational direction and control electronics with a stored control program, the method comprising:

• actuation of the rotors with the control electronics in such a way that they rotate according to their respective nominal rotational direction, and

• in the failure situation, actuation of at least one of the remaining rotors with the control electronics in such a way that said rotor rotates at least temporarily counter to its nominal rotational direction.

2. Method according to Claim 1, **characterized in that** the rotors are arranged around the centre of gravity of the multicopter.

3. Method according to one of the preceding claims, **characterized in that** the rotors are arranged in a plane and/or horizontally.

4. Method according to one of the preceding claims, **characterized in that** the rotors are arranged with an alternating nominal rotational direction.

5. Method according to one of the preceding claims, wherein the multicopter comprises at least eight rotors, each with a defined nominal rotational direction.

6. Method according to one of Claims 1 to 4, wherein the multicopter comprises at least six rotors, each with a defined nominal rotational direction, wherein in the failure situation one of the remaining rotors is actuated in such a way that it compensates the yaw moment generated by the other rotors by at last temporarily rotating counter to its nominal rotational direction.

7. Method according to Claim 6, **characterized in that** the rotor which rotates at least temporarily counter to its nominal rotational direction additionally generates a controlled yaw moment.

8. Method according to Claim 6 or 7, **characterized in that** the rotors are arranged with an alternating nominal rotational direction in the form of a hexagon, wherein the rotor lying opposite the failed rotor with respect to the centre of gravity of the multicopter is actuated in such a way that it compensates the yaw moment generated by the other rotors by at least temporarily rotating counter to its nominal rotational direction.

9. Multicopter with improved flight characteristics in a failure situation, having at least six rotors, each with a defined nominal rotational direction and control electronics with a stored control program, wherein the control electronics are configured

• to actuate the rotors in such a way that they rotate according to their respective nominal rotational direction, and

• to actuate, in the failure situation, at least one of the remaining rotors in such a way that it rotates at least temporarily counter to its nominal rotational direction.

10. Multicopter according to Claim 9, **characterized in that** the rotors are arranged in a plane and/or horizontally.

11. Multicopter according to one of Claims 9 to 10, **characterized in that** the rotors are arranged with an alternating nominal rotational direction.

12. Multicopter according to one of Claims 9 to 11, **characterized in that** the rotors are arranged on carrier elements, wherein the carrier elements are connected to one another by means of brace elements.

13. Multicopter according to Claim 12, further having a fuselage element close to the centre of gravity of the multicopter, wherein the fuselage element is connected to the carrier elements or brace elements.

14. Multicopter according to one of Claims 9 to 13, having eight rotors which are arranged in a V-shaped arrangement.

15. Multicopter according to one of Claims 9 to 13, having the same number of rotors with a first defined nominal rotational direction as rotors with a second defined nominal rotational direction, wherein the first nominal rotational direction is opposed to the second nominal rotational direction.

**Revendications**

1.  Procédé pour améliorer les propriétés de vol d'un multicoptère dans une situation de panne, dans lequel le multicoptère comprend au moins six rotors ayant chacun un sens de rotation théorique défini et une électronique de commande avec un programme de commande mémorisé, le procédé présentant:

    • la commande des rotors avec l'électronique de commande, de telle manière qu'ils tournent dans leur sens de rotation théorique respectif,
    • dans la situation de panne, la commande d'au moins un des rotors restants avec l'électronique de commande, de telle manière qu'il tourne au moins temporairement contre son sens de rotation théorique.

2.  Procédé selon la revendication 1, **caractérisé en ce que** les rotors sont disposés autour du centre de gravité du multicoptère.

3.  Procédé selon l'une quelconque des revendications précédentes, **caractérisé en ce que** les rotors sont disposés dans un plan et/ou horizontalement.

4.  Procédé selon l'une quelconque des revendications précédentes, **caractérisé en ce que** les rotors sont disposés avec un sens de rotation théorique alterné.

5.  Procédé selon l'une quelconque des revendications précédentes, **caractérisé en ce que** le multicoptère comprend au moins huit rotors ayant chacun un sens de rotation théorique défini.

6.  Procédé selon l'une quelconque des revendications 1 à 4, dans lequel le multicoptère comprend au moins six rotors ayant chacun un sens de rotation théorique défini, dans lequel, dans la situation de panne, on commande un des rotors restants de telle manière qu'il compense le couple de lacet produit par les autres rotors, par le fait qu'il tourne au moins temporairement contre son sens de rotation théorique.

7.  Procédé selon la revendication 6, **caractérisé en ce que** le rotor tournant au moins temporairement contre son sens de rotation théorique produit en outre un couple de lacet contrôlé.

8.  Procédé selon une revendication 6 ou 7, **caractérisé en ce que** les rotors ayant un sens de rotation théorique alterné sont disposés sous la forme d'un hexagone, dans lequel on commande le rotor opposé au rotor défectueux par rapport au centre de gravité de telle manière qu'il compense le couple de lacet produit par les autres rotors, par le fait qu'il tourne au moins temporairement contre son sens de rotation théorique.

9.  Multicoptère présentant des propriétés de vol améliorées dans une situation de panne, présentant au moins six rotors ayant chacun un sens de rotation théorique défini et une électronique de commande avec un programme de commande mémorisé, dans lequel l'électronique de commande est configurée pour

    commander les rotors de telle manière qu'ils tournent dans leur sens de rotation théorique, et
    commander au moins un des rotors restants, dans la situation de panne, de telle manière qu'il tourne au moins temporairement contre son sens de rotation théorique.

10. Multicoptère selon la revendication 9, **caractérisé en ce que** les rotors sont disposés dans un plan et/ou horizontalement.

11. Multicoptère selon une des revendications 9 à 10, **caractérisé en ce que** les rotors sont disposés avec le sens de rotation théorique alterné.

12. Multicoptère selon l'une quelconque des revendications 9 à 11, **caractérisé en ce que** les rotors sont disposés sur des éléments de support, dans lequel les éléments de support sont assemblés les uns aux autres par des éléments d'entretoisement.

13. Multicoptère selon la revendication 12, présentant en outre un élément de coque à proximité du centre de gravité du multicoptère, dans lequel l'élément de coque est relié aux éléments de support ou aux éléments d'entretoisement.

14. Multicoptère selon l'une quelconque des revendications 9 à 13, présentant huit rotors, qui sont disposés selon un agencement en forme de V.

15. Multicoptère selon l'une quelconque des revendications 9 à 13, présentant exactement autant de rotors avec un premier sens de rotation théorique défini que de rotors avec un second sens de rotation théorique défini, dans lequel le premier sens de rotation théorique est opposé au second sens de rotation théorique.

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20060266881 A1
- DE 102008014853
- WO 2008000203 A1
- US 20100108801 A1

**In der Beschreibung aufgeführte Nicht-Patentliteratur**

- *Technology Review,* Dezember 2009, 33